# EUROPEAN PATENT SPECIFICATION

(11) **EP 2 208 677 B1**
(45) Date of publication and mention of the grant of the patent: **30.05.2012**
(21) Application number: 09179968.4
(22) Date of filing: 22.10.2007
(51) Int. Cl.: B65B 31/02, B65B 61/26, B65B 61/02

(54) **Apparatus for the vacuum packaging of food products**
Vorrichtung zur Vakuumverpackung von Nahrungsmitteln
Appareil pour l'emballage sous vide de produits alimentaires

(30) Priority: 24.11.2006 IT VR20060181
(43) Date of publication of application: 21.07.2010
(62) Divisional of application: 07020587.7
(73) Proprietor: Salvaro, Marziano, 37024 Negrar (Prov. of Verona) (IT)
(72) Inventor: Salvaro, Marziano, 37024 Negrar (Prov. of Verona) (IT)
(74) Representative: Modiano, Micaela Nadia

(56) References cited:
- EP-A1- 1 403 185
- WO-A1-98/21099
- DE-A1- 1 586 146
- DE-U1- 29 703 671
- FR-A- 1 322 624
- FR-A- 1 384 507
- JP-A- 2005 247 383
- US-A- 4 057 951
- US-A1- 2003 159 405

## Description

The present invention relates to an apparatus for the vacuum packaging of food products.

As is known, easily perishable food products are currently preserved for long periods by using devices which allow to package such products in appropriately provided enclosures, constituted for example by plastic bags or pouches, in which an at least partial vacuum is produced before they are sealed.

It is also known to use such apparatuses in vacuum cooking techniques, which in practice consist in vacuum-packaging the foodstuffs to be cooked inside pouches which contain any seasonings and spices and in subsequently placing the foodstuffs thus packaged in ventilated ovens in order to cook them.

One particular type of vacuum-packaging apparatus is generally constituted by a box-like base frame which delimits, with an openable upper lid, a vacuum chamber which can be connected to an air suction pump and is provided in a downward region with a substantially horizontal surface for supporting the pouch containing the products to be packaged which in each instance is placed in the vacuum chamber in order to generate vacuum inside it.

Usually, in the vacuum chamber, proximate to one end of the supporting surface, there is also a sealing device, which is generally constituted by a heat-sealing bar provided with an electrical resistor which is activated, after aspirating the air out of the vacuum chamber, so as to provide a heat-seal proximate to the mouth of the pouch placed on the supporting surface, so as to ensure its perfect hermetic sealed closure.

In known solutions, the heat-sealing bar is supported at its opposite ends by the box-like base frame so that it can slide along vertical engagement guides provided on mutually opposite side walls of the vacuum chamber, in order to pass from an inactive condition, in which it is disengaged from the pouch, to an active condition, in which it is pressed against the mouth of the pouch, in order to allow to seal the pouch, and vice versa.

Moreover, the electrical resistor provided in the heat-sealing bar is connected to an electric power supply unit, arranged in the box-like frame, by means of conducting wires which have a portion which extends substantially along the walls of the vacuum chamber, to which they are generally fixed by means of screws.

Although they are conceptually valid, the apparatuses described above however suffer some disadvantageous aspects.

First of all, the location of the heat-sealing bar proximate to the supporting surface makes it difficult to clean the vacuum chamber correctly and completely.

Moreover, the presence of the conducting wires of the heat-sealing bar on the walls of the vacuum chamber, in addition to constituting an aesthetically unpleasant element, prevents optimum cleaning of the internal side walls of the vacuum chamber.

In order to try to solve this problem at least partly, a solution has been proposed in which the ends of the heat-sealing bar can be extracted from the vertical guides and the heat-sealing bar can be disconnected from the conducting wires.

However, it is clear that even in this case the conducting wires of the heat-sealing bar, by remaining fixed to the walls of the vacuum chamber, continue to constitute a hindrance during the operations for cleaning the apparatus.

Moreover, the extraction of the heat-sealing bar from the vertical guides is often awkward, due to possible jamming of the ends of the heat-sealing bar with the walls of the vertical guides.

Another drawback of apparatuses of the background art is observed when they are used for vacuum cooking.

By arranging the pouch on the supporting surface of the chamber, the liquid seasonings introduced in the pouch together with the food to be packaged in fact tend to escape out of the mouth of the pouch and spill externally, with the consequence of dirtying the vacuum chamber and with the risk of being possibly aspirated by the air suction pump.

Another problem which is strongly felt in this sector and is currently not solved by apparatuses of the background art is to allow the user to check easily the date by which food which has been vacuum-packaged by using the apparatuses described above must be preferably eaten.

FR 1 322 624 discloses an apparatus for vacuum packaging of food products having a combination of features as set forth in the pre-characterizing portion of the appended claim 1.

The aim of the present invention is to provide an apparatus for the vacuum packaging of food products which is capable of providing a valid solution to the above noted problems of the background art.

Within this aim, an object of the invention is to provide an apparatus for the vacuum packaging of food products which allows to access easily all the regions of the vacuum chamber in order to clean it perfectly without having the hindrance of the heat-sealing bar or of its conducting wires.

Another object of the invention is to provide an apparatus for the vacuum packaging of food products which allows to place inside the vacuum chamber pouches which contain liquids without such liquids being able to spill out from the mouth of the pouch.

Another object of the invention is to provide an apparatus for the vacuum packaging of food products which is capable of applying to the packaging pouch indications which allow the user to check easily the expiry date of the food products contained in the pouch.

Another object to the invention is to provide an apparatus for the vacuum packaging of food products which, thanks to its particular constructive characteristics, is capable of giving the greatest assurances of reliability and safety in use.

Still another object of the present invention is to provide an apparatus which has a very simple structure and a very low cost.

This aim and these and other objects, which will become better apparent hereinafter, are achieved by an apparatus for the vacuum packaging of food products, as defined in claim 1.

Further characteristics and advantages of the invention will become better apparent from the description of some preferred but not exclusive embodiments of the apparatus according to the invention, illustrated by way of non-limiting example in the accompanying drawings, wherein:

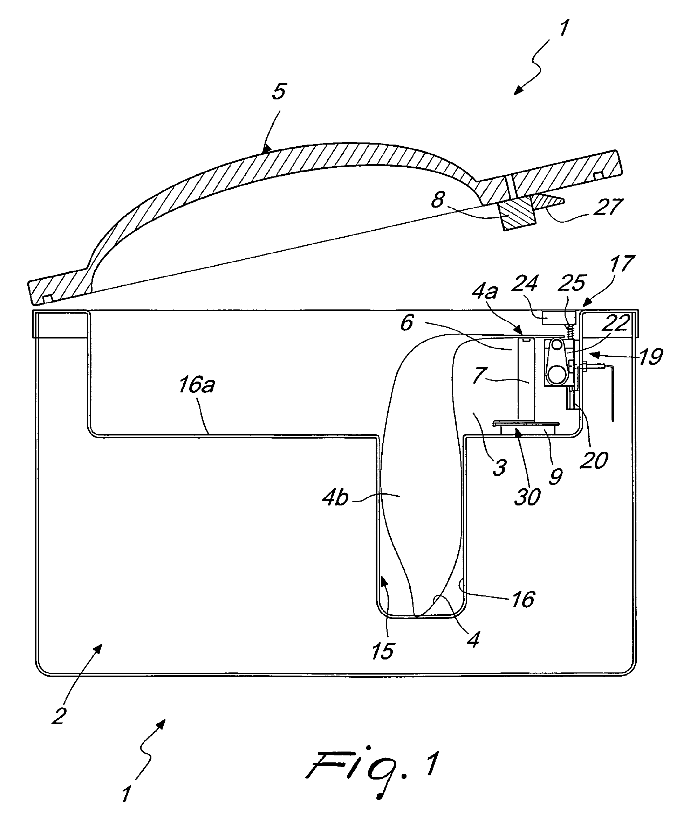

Figure 1 is a longitudinal sectional view of the apparatus according to the invention;

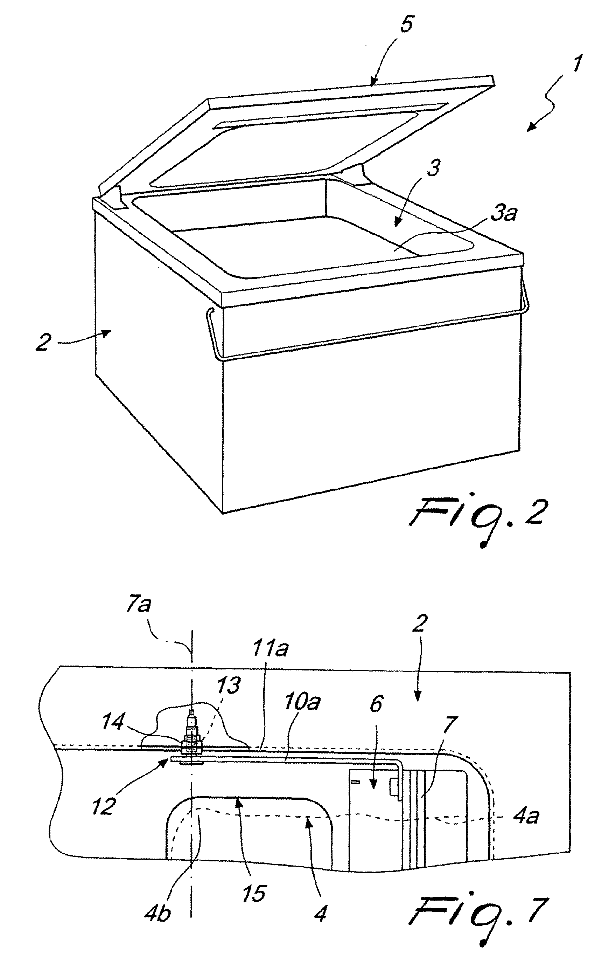

Figure 2 is a perspective view of the apparatus according to the invention;

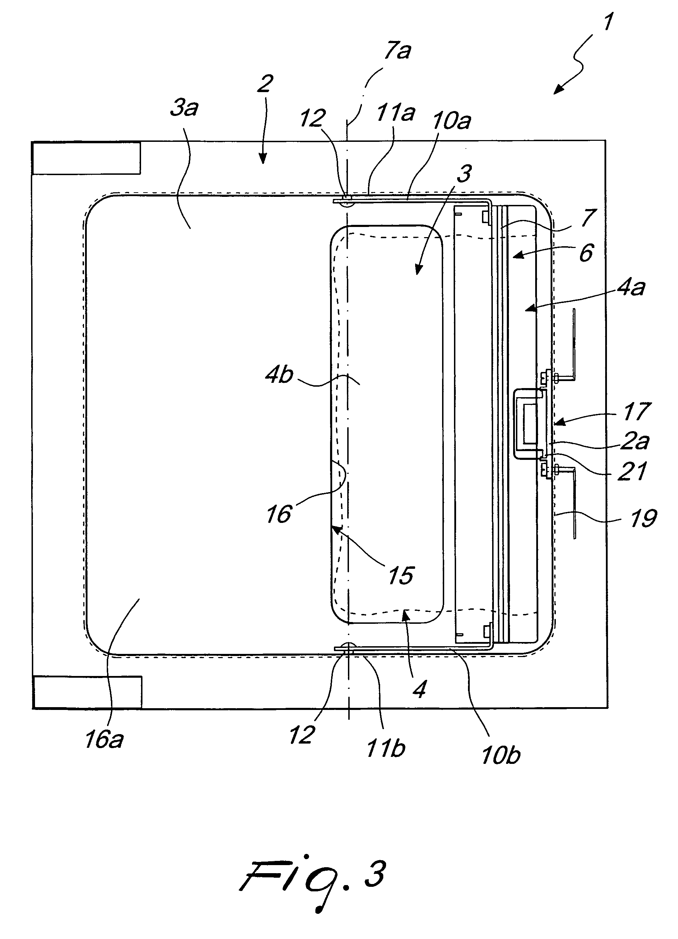

Figure 3 is a top plan view of the apparatus according to the invention, with the lid shown in phantom lines for the sake of simplicity;

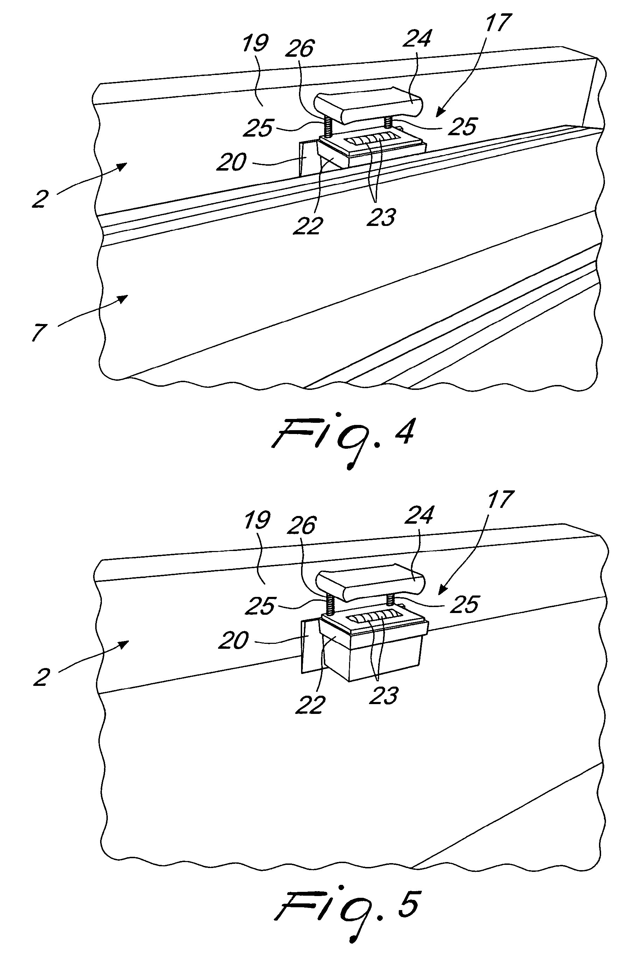

Figures 4 and 5 are perspective views of a detail of the apparatus according to the invention, illustrating a printing device;
Figure 6 is an enlarged-scale longitudinal sectional view of a detail of the apparatus according to the invention;
Figure 7 is an enlarged-scale top view of a portion of the apparatus according to the invention;
Figure 8 is a top perspective view of the inside of the vacuum chamber with the heat-sealing bar in the lowered position;
Figure 9 is a top perspective view of the inside of the vacuum chamber with the heat-sealing bar in a raised position.

With reference to the figures, the apparatus for the vacuum packaging of food products according to the invention, generally designated by the reference numeral 1, comprises a box-like frame 2, which defines at least one portion of a vacuum chamber 3, which can be connected in a per se known manner to vacuum generation means which are constituted for example by a vacuum pump.

The vacuum chamber 3 is designed to accommodate a pouch 4 into which the food products to be packaged are placed.

As usual, the pouch 4 is made of plastic material suitable for food use and is provided with at least one heat-sealable portion.

Preferably, the vacuum chamber 3 is delimited in a downward region by the box-like frame 2 and is closed in an upward region by a lid 5, which is conveniently pivoted to the box-like frame 2 to allow to lift it and thus allow access from outside to the vacuum chamber 3.

Inside the vacuum chamber 3 sealing means 6 are provided which are capable of heat-sealing the pouch substantially at its mouth 4a.

In particular, as shown clearly in the illustrated examples, the sealing means 6 comprise conveniently a heat-sealing bar 7 which has an electrical heating resistor and a contrast bar 8 which is mounted on the lid 5 and is designed to face the heat-sealing bar 7 when the lid 5 is in the closed condition.

More particularly, with the lid 5 in the closed condition and the pouch 4 arranged in the vacuum chamber 3, the heat-sealing bar 7, as usual, can be actuated on command in order to move from an inactive position, in which it is spaced from the contrast bar 8, to an active position, in which it is adapted to press the pouch against the contrast bar 8.

The movement of the heat-sealing bar 7 from the inactive position to the active position can be achieved, in a per se known manner, by means of an inflatable pad 9, which is interposed between the heat-sealing bar 7 and the box-like frame 2. More particularly, the inflatable pad 9 can be connected to an air inflow source which allows to move it from a collapsed condition to an expanded condition, so as to provide the transition of the heat-sealing bar 7 from the inactive position to the active position.

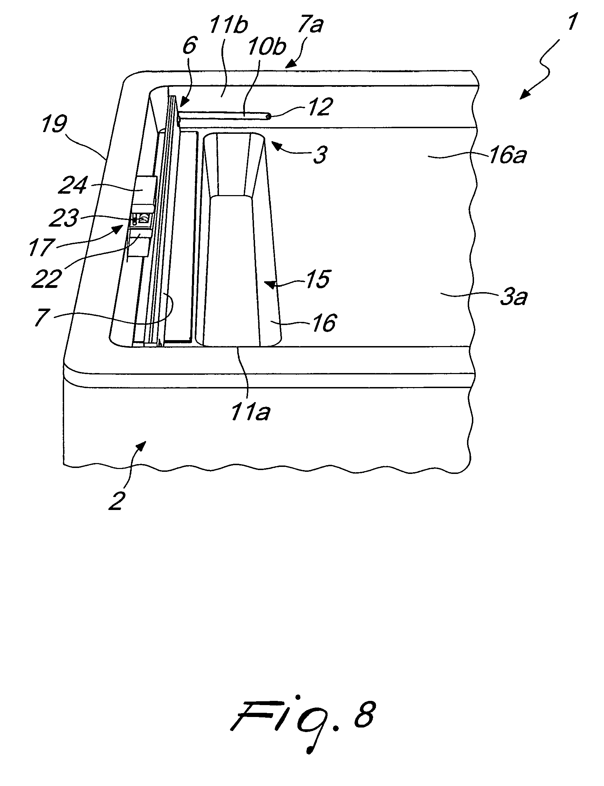

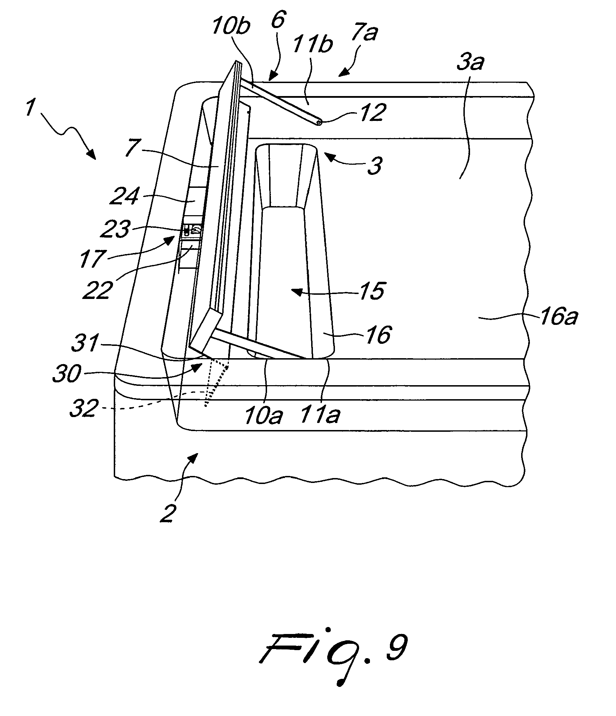

A peculiar aspect of the invention resides in that the heat-sealing bar 7 is connected so that it can oscillate to the box-like frame 2, about an oscillation axis 7a which is substantially parallel and spaced with respect to the heat-sealing bar 7, so as to allow the passage of the heat-sealing bar 7 from a lowered position, shown in Figure 8, in which the heat-sealing bar 7 is closer to the box-like frame 2, so as to be able to interact for example with the inflatable pad 9, to a raised position, shown in Figure 9, in which the heat-sealing bar 7 is spaced from the box-like frame 2 in order to allow the user to have free access to the vacuum chamber 3 in particular after lifting the lid 5, and vice versa.

This of course allows to perform in-depth cleaning of the vacuum chamber 3, therefore ensuring better hygiene, since the heat-sealing bar 7, when it is moved into the raised position, in no way hinders access to all the regions of the vacuum chamber 3.

Moreover, with the configuration described above the removal of the inflatable pad 9 is also facilitated; such pad can be provided for example with a quick-coupling nipple 9a which can be inserted in a connecting port 9b which is provided in the bottom wall 3a of the vacuum chamber 3 and is connected to an air duct 9c, which is connected to the outside environment by means of an appropriately provided valve and allows to introduce air in the inflatable pad 9 or to discharge air from it. Conveniently, the connecting port 9b can be provided with an appropriately provided plug to close it temporarily during the cleaning of the vacuum chamber.

Conveniently, the heat-sealing bar 7 is connected to the box-like frame 2 by means of two supporting arms 10a and 10b, which are fixed at one of their ends to a respective end portion of the heat-sealing bar 7 and are articulated at their other end, about the oscillation axis 7a, to a respective lateral delimiting wall 11a, 11b of the vacuum chamber 3.

Preferably, each of the supporting arms 10a, 10b is connected to the corresponding lateral delimiting wall 11a, 11b of the vacuum chamber 3 by means of a corresponding articulation hinge 12, which comprises advantageously means for electrical connection to an electric power supply unit for the heat-sealing bar 7, which is arranged conveniently inside the box-like frame 2.

According to a preferred embodiment, such electrical connection means are constituted respectively by a male electrical connector 13, which is connected preferably to the corresponding arm 10a, 10b, and by a female electrical connector 14, which is provided on the corresponding lateral delimiting wall 11a, 11b. In particular, the male electrical connector 13 and the female electrical connector 14 are arranged coaxially to the oscillation axis 7a and can be mutually coupled so that they can rotate about their own axis so as to allow the oscillation of the arms with respect to the box-like frame 2.

Advantageously, the supporting arms 10a, 10b are made of electrically conducting material in order to connect electrically the end portions of the heat-sealing bar 7 and more particularly its electrical resistor to the electrical connection means cited above, thus achieving the electrical connection of the heat-sealing bar 7 to its power supply unit without the aid of conducting wires as in the background art.

Advantageously, the heat-sealing bar 7 may also be completely removable from the box-like frame 2 so as to offer even easier access to the vacuum chamber 3.

In this case, the supporting arms 10a, 10b are provided so that they can be flexed elastically away from the corresponding lateral delimiting wall 11a, 11b, so as to be able to uncouple the respective male electrical connector 13 with respect to the corresponding female electrical connector 14 and achieve the disassembly of the heat-sealing bar 7 from the box-like frame 2.

According to another aspect of the present invention, the vacuum chamber 3 is provided with at least one accommodation region 15 for positioning substantially vertically at least one portion 4b of the pouch 4 which is arranged on the opposite side with respect to the mouth 4a of the pouch 4.

This allows the products contained in the pouch 4 to gather toward the bottom of such pouch, thus avoiding the risk that they may escape from its mouth 4a.

Conveniently, the accommodation region 15 comprises a recess 16 which is defined in the bottom wall 3a of the vacuum chamber 3 and conveniently is located proximate to the sealing means 6 and more precisely proximate to the heat-sealing bar 7, protruding for example substantially parallel to the heat-sealing bar 7.

It should be noted that it is optionally conveniently possible to provide in the bottom wall 3a of the vacuum chamber 3 also a substantially horizontal supporting surface 16a for the pouch 4, as usually occurs in the background art, such surface being usable if the pouch 4 contains particularly bulky products which are unlikely to be able to exit from its mouth 4a.

In particular, the supporting surface 16a is arranged advantageously on the opposite side of the heat-sealing bar 7 with respect to the recess 16, as shown in the figures.

Another characteristic of the invention consists in that it provides for the presence of at least one printing device 17, which allows to apply to the pouch 4 indications of various kinds, such as for example the packaging date, the expiration date of the packaged products, the batch number of the resulting package, and so forth.

Advantageously, the printing device 17 is capable of producing a hot imprinting on the pouch 4, as will become better apparent hereinafter.

The printing device 17 is preferably arranged between the sealing means 6 and the lateral delimiting wall 19 of the vacuum chamber 3, which is adjacent to the sealing means 6 and faces them.

In this manner, the indications can be applied by the printing device 17 to a region of the pouch 4 which is comprised between the heat-sealing line provided by the heat-sealing means 6 and its mouth 4a.

Preferably, the printing device 17 is connected detachably to the lateral delimiting wall 19 of the vacuum chamber 3.

In particular, it is possible to provide on the lateral delimiting wall 19 for example a coupling with a slider 20 which can engage slidingly a corresponding accommodation seat 21 which is defined in the body of the printing device 17.

In greater detail, the printing device 17 is constituted for example by a base 22 which supports a plurality of printing rollers 23, which can rotate axially on command and bear in relief, on their lateral surface, the numbers and/or characters to be imprinted onto the pouch 4.

It should be noted that the rotation of the printing rollers 23 can be performed manually by the user for example after removing the printing device 17 from the slider coupling 20 or can be performed by actuation means, such as for example an electric motor which can be controlled by means of a selection unit which allows the user to set the indication to be printed on the pouch 4.

A heatable head 24 faces the printing rollers 23 and is provided with an appropriately provided electrical resistor. The head 24 is conveniently connected to the base 22 by means of rods 25 which can slide axially within guiding seats provided in the base 22, in order to allow on command to move the head 24 toward or away with respect to the base 22 between an inactive position, in which it is possible to insert the pouch 4 between the base 22 and the head 24, and an active position, in which the pouch 4 is pressed by the head 24 against the printing rollers 23.

The rods 25 can optionally provide the electrical connection of the resistor arranged on the head 24 to its electrical power supply, which is preferably accommodated within the base 22 and can be constituted by ordinary batteries or by the mains electrical power supply of the apparatus.

Advantageously, elastic return means act between the base 22 and the head 24 and are designed to contrast the passage of the head 24 from the inactive position to the active position and are constituted for example by helical springs 26 which are fitted around the rods 25.

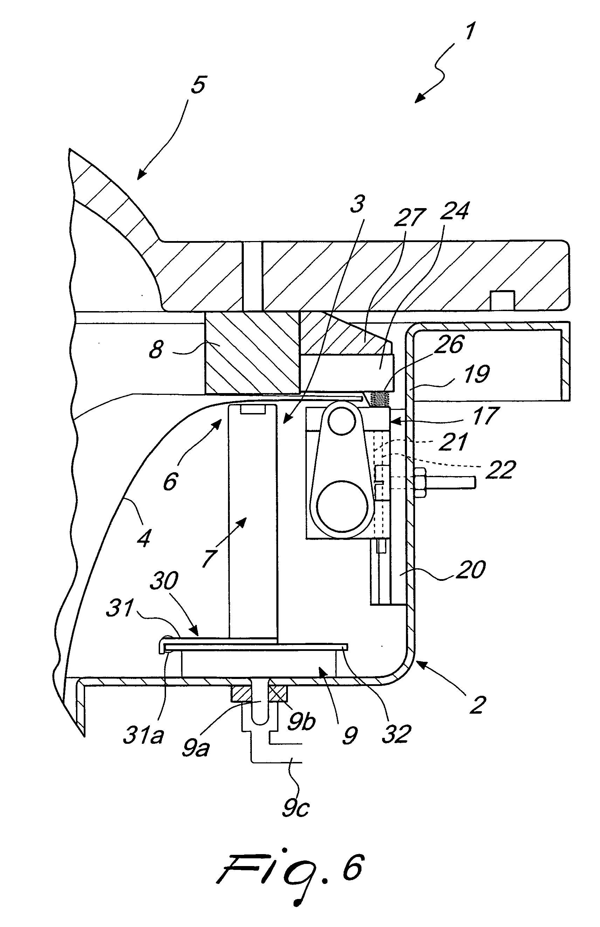

Conveniently, on the inner side of the lid 5 there is an abutment portion 27, which is designed to engage the head 24 during the transition of the lid 5 from the open condition to the closed condition, so as to move the head 24 from the inactive position to the active position, as shown in particular in Figure 6.

It should be noted that on the side of the heat-sealing bar 7 that is designed to face the inflatable pad 9 there is conveniently a plate 30 which protrudes laterally from the heat-sealing bar 7 and allows optimum distribution of the thrust provided by the inflatable pad 9 in order to perform the transition of the heat-sealing bar 7 from its inactive position to its active position.

In order to allow a more convenient access to the printing device 17, the plate 30 is constituted advantageously by a first sheet-like element 31, which is fixed to the heat-sealing bar 7 and protrudes laterally from the heat-sealing bar 7 in the opposite direction with respect to the printing device 17, and by a second sheet-like element 32, which is connected, along one edge, to the free end 31a of the first sheet-like element 31 so that it can oscillate freely in order to arrange itself by gravity in a substantially vertical position when the heat-sealing bar 7 is moved to the raised position.

Operation of the apparatus according to the invention is as follows.

The lid 5 is opened and the printing device 17 is prepared, for example by extracting it from its slider coupling 20, after first of all bringing the heat-sealing bar 7 to the raised position by way of its rotation about its oscillation axis 7a, and by then turning manually the printing rollers 23, so as to set the indication that one wishes to imprint on the pouch 4 which will be used for vacuum packaging.

At this point, the printing device 17 is repositioned on the slider coupling 20 and, again with the lid 5 in the open condition, the pouch 4 containing the products to be packaged is arranged within the vacuum chamber 3.

If the pouch 4 contains products which might escape from its mouth 4a before it is sealed, the pouch 4 is arranged with its bottom side within the accommodation region 15 and more particularly is inserted in the recess 16, while the mouth 4a is made to pass over the heat-sealing bar 7, which has been previously brought to the lowered position, and is inserted between the head 24 and the base 22 of the printing device 17.

Once these operations have ended, the lid 5 is closed and rests, with its abutment portion 27, against the head 24 and therefore pushes the head 24 toward the base 22, so that the pouch 4 is pressed by the head 24 against the printing rollers 23.

With the lid 5 in the closed condition, the vacuum pump is activated so as to create in the vacuum chamber 3 a negative pressure which allows to extract the air from the pouch 4 through its mouth 4a.

Once the selected degree of vacuum has been reached, the valve that controls the air duct 9c of the inflatable pad 9 is opened so as to connect the inside of the inflatable pad 9 to the outside environment. Due to the negative pressure in the vacuum chamber 3, air is drawn into the inflatable pad 9, which by assuming an expanded condition pushes the heat-sealing bar 7 toward the contrast bar 8 until it reaches its active position.

At this point, the resistor of the heat-sealing bar 7 is supplied with electric power so as to heat-seal the pouch 4 and the resistor that is present in the head 24 of the printing device 17 is powered so that the head 24, once it has been heated, allows to provide on the pouch 4 the hot imprinting of the selected indication.

After maintaining negative pressure in the vacuum chamber 3 for a preset time, atmospheric pressure is restored within the vacuum chamber 3.

At this point, the lid 5 is opened, allowing the elastic return means to return the head 24 to the inactive position, and the pouch 4 with the vacuum-packaged products contained therein is extracted from the vacuum chamber 3.

Restoring atmospheric pressure inside the vacuum chamber 3 causes the transition of the inflatable pad 9 from the expanded condition to the collapsed condition, so as to allow the return of the heat-sealing bar 7 to its inactive position due to its own weight.

In practice it has been found that the invention achieves, in all of its embodiments, the intended aim and objects and in particular the fact is stressed that thanks to the connection with the possibility to oscillate of the heat-sealing bar with respect to the box-like frame, it allows to move very conveniently and rapidly the heat-sealing bar into a position in which it does not interfere with the maintenance and cleaning operations required for the correct use of the apparatus.

Another advantage of the invention is to provide a configuration of the apparatus which does not require the presence of conducting wires within the vacuum chamber, thus achieving a positive result also from an aesthetic point of view.

It should also be added that thanks to the presence of the printing device, the invention also offers the great advantage of allowing to apply to the packaged pouch indications which can provide the user with useful information as regards the possibility to eat the vacuum-packaged foodstuffs, such as the expiration date or the packaging date, and this is not available in current apparatuses for professional use.

All the characteristics of the invention indicated above as advantageous, convenient or the like may also be omitted or be replaced with equivalents.

The individual characteristics given with reference to general teachings or particular embodiments may all be present in other embodiments or may replace characteristics in these embodiments.

The invention thus conceived is susceptible of numerous modifications and variations, all of which are within the scope of the appended claims.

In practice, the materials used, as well as they are compatible with the specific use, as well as the dimensions and shapes, may be any according to requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An apparatus (1) for the vacuum packaging of food products, comprising a box-like frame (2) which defines at least one portion of a vacuum chamber (3) which can be connected to vacuum generation means and is adapted to accommodate a pouch (4) which contains the food products to be packaged, said vacuum chamber (3) containing sealing means (6) which are adapted to close said pouch (4) hermetically, said vacuum chamber (3) having at least one accommodation region (15) for positioning substantially vertically at least one portion (4b) of said pouch (4) which is arranged on the opposite side with respect to the mouth (4a) of said pouch (4), said at least one accommodation region (15) comprising a recess (16) which is defined in the bottom wall (3a) of said vacuum chamber (3), said sealing means (6) comprising a heat-sealing bar (7), said recess (16) being arranged longitudinally and substantially parallel to said heat-sealing bar (7), **characterized in that** said heat-sealing bar (7) is connected to said box-like frame (2) by means of two supporting arms (10a,10b) which are fixed, at one of their ends, to a respective terminal portion of said heat-sealing bar (7) and are articulated, at the other end, about said oscillation axis (7a), to a respective wall (11a,11b) for delimiting laterally said vacuum chamber (3).

2. The apparatus (1) according to claim 1, **characterized in that** at least one portion of the bottom wall (3a) of said vacuum chamber (3) defines a substantially horizontal supporting surface (16a) for said pouch (4).

3. The apparatus (1) according to claim 2, **characterized in that** said supporting surface (16a) is arranged on the opposite side of said heat-sealing bar (7) with respect to said recess (16).

4. The apparatus (1) according to claim 2, **characterized in that** said heat-sealing bar (7) is connected so that it can oscillate to said box-like frame (2), about an oscillation axis (7a) which is substantially parallel and spaced with respect to said heat-sealing bar (7), in order to pass from a lowered position, in which said heat-sealing bar (7) is close to said box-like frame (2), to a raised position, in which said heat-sealing bar (7) is spaced from said box-like frame (2), and vice versa.

5. The apparatus (1) according to one or more of the preceding claims, **characterized in that** each of said supporting arms (10a,10b) is connected to the respective lateral delimiting wall (11a,11b) of said vacuum chamber (3) by means of a corresponding articulation hinge (12), which comprises means (13,14) for electrical connection to an electrical power supply unit of said heat-sealing bar (7).

6. The apparatus (1) according to claim 5, **characterized in that** said electrical connection means comprise a male electrical connector (13) and a female electrical connector (14), which are arranged coaxially to said oscillation axis (7a) and are mutually associable so that they can rotate about their own axis.

7. The apparatus (1) according to claim 5, **characterized in that** said axis (7a) are made of electrically conducting material in order to connect electrically the end portions of said heat-sealing bar (7) to said electrical connection means (13,14).

8. The apparatus (1) according to claim 6, **characterized in that** said arms (10a,10b) can be flexed elastically away from the corresponding lateral delimiting wall (11a,11b) in order to mutually uncouple the respective male electrical connector (13) from the corresponding female electrical connector (14).

9. The apparatus (1) according to claim 1, **characterized in that** it comprises at least one device (17) for printing indications on said pouch (4).

10. The apparatus (1) according to claim 9, **characterized in that** said printing device (17) is arranged between said sealing means (6) and a wall (11a,11b) for delimiting laterally said vacuum chamber (3) which is adjacent to, and faces, said sealing means (6).

11. The apparatus (1) according to claim 10, **characterized in that** it comprises, in said lateral delimiting wall (11a,11b), a coupling with a slider (20) which can engage slidingly a corresponding containment seat (21) which is defined in said printing device (17),

12. The apparatus (1) according to claim 9, **characterized in that** said printing device (17) comprises a base (22), which supports a plurality of printing rollers (23) which can rotate axially on command and are provided peripherally in relief with numbers and/or characters to be imprinted on said pouch (4), and a head (24) which can be heated and can move on command toward or away from said base (22) between an inactive position, in which said pouch (4) can be positioned between said base (22) and said head (24), and an active position, in which said pouch (4) is pressed by said head (24) against said printing rollers (23).

13. The apparatus (1) according to claim 12, **characterized in that** said head (24) can be engaged by an abutment portion (27) which is defined on an upper closure lid (5) of said vacuum chamber (3), in the transition of said closure lid (5) from an open condition to a closed condition in order to move said head (24) from said inactive position to said active position.

14. The apparatus (1) according to claim 12, **characterized in that** elastic return means (25,26) are interposed between said base (22) and said head (24) and are adapted to contrast the transition of said head (24) from said inactive position to said active position.

## Patentansprüche

1. Vorrichtung (1) zum Vakuum-Verpacken von Lebensmittelprodukten, die einen kastenartigen Rahmen (2) umfasst, der wenigstens einen Teil einer Vakuumkammer (3) definiert, die mit Vakuumerzeugungsmitteln verbunden werden kann und eingerichtet ist, um einen Beutel (4) aufzunehmen, der die zu verpackenden Lebensmittelprodukte enthält, wobei die Vakuumkammer (3) Versiegelungsmittel (6) umfasst, die eingerichtet sind, um den Beutel (4) hermetisch abzuschließen, wobei die Vakuumkammer (3) wenigstens eine Aufnahmeregion (15) zum im Wesentlichen vertikalen Positionieren wenigstens eines Anteils (4b) des Beutels (4) umfasst, die auf der relativ zu der Öffnung (4a) des Beutels (4) entgegen gesetzten Seite angeordnet ist, wobei die wenigstens eine Aufnahmeregion (15) eine Vertiefung (16) umfasst, die in der Bodenwandung (3a) der Vakuumkammer (3) definiert ist, wobei die Versiegelungsmittel (6) einen Heißsiegelbalken (7) umfasst, wobei die Vertiefung (16) longitudinal und im Wesentlichen parallel zu dem Heißsiegelbalken (7) angeordnet ist, **dadurch gekennzeichnet, dass** der Heißsiegelbalken (7) mit dem kastenartigen Rahmen (2) über zwei Stützarme (10a, 10b) verbunden ist, die mit einem ihrer Enden an einem jeweiligen Endanteil des Heißsiegelbalkens (7) befestigt sind und mit dem anderen Ende um eine Oszillationsachse (7a) gelenkig mit einer entsprechenden Wand (11a, 11b) zum lateralen Begrenzen der Vakuumkammer (3) verbunden sind.

2. Vorrichtung (1) nach Anspruch 1, **dadurch gekennzeichnet, dass** wenigstens ein Anteil der Bodenwandung (3a) der Vakuumkammer (3) eine im Wesentlichen horizontale Stützfläche (16a) für den Beutel (4) definiert.

3. Vorrichtung (1) nach Anspruch 2, **dadurch gekennzeichnet, dass** die Stützfläche (16a) auf der dem Heißsiegelbalken (7) entgegen gesetzten Seite relativ zu der Vertiefung (16) angeordnet ist.

4. Vorrichtung (1) nach Anspruch 2, **dadurch gekennzeichnet, dass** der Heißsiegelbalken (7) so mit dem kastenartigen Rahmen (2) verbunden ist, dass er um eine Oszillationsachse (7a) oszillieren kann, die im Wesentlichen parallel und beabstandet zu dem Heißsiegelbalken (7) verläuft, um aus einer abgesenkten Position, in der der Heißsiegelbalken (7) nahe an dem kastenartigen Rahmen (2) ist, in eine erhöhte Position zu gelangen, in der der Heißsiegelbalken (7) von dem kastenartigen Rahmen (2) entfernt ist, und umgekehrt.

5. Vorrichtung (1) nach einem oder mehreren der vorstehenden Ansprüche, **dadurch gekennzeichnet, dass** Jeder der Stützarme (10a, 10b) mit der jeweiligen lateralen Begrenzungswand (11a, 11b) der Vakuumkammer (3) über ein entsprechendes Drehgelenk (12) verbunden ist, das Mittel (13, 14) für eine elektrische Verbindung des Heißsiegelbalkens (7) mit einem elektrischen Netzteil umfasst.

6. Vorrichtung (1) nach Anspruch 5, **dadurch gekennzeichnet, dass** die elektrischen Verbindungsmittel einen elektrischen Stecker (13) und eine elektrische Buchse (14) umfassen, die koaxial zu der Oszillationsachse (7a) angeordnet und so miteinander verbindbar sind, dass sie um ihre eigene Achse rotieren können.

7. Vorrichtung (1) nach Anspruch 5, **dadurch gekennzeichnet, dass** die Achse (7a) aus elektrisch leitendem Material hergestellt ist, um die Endanteile des Heißsiegelbalkens (7) elektrisch mit den elektrischen Verbindungsmitteln (13, 14) zu verbinden.

8. Vorrichtung (1) nach Anspruch 6, **dadurch gekennzeichnet, dass** die Arme (10a, 10b) elastisch von der jeweiligen lateralen Begrenzungswand (11a, 11b) weggebogen werden können, um den jeweiligen elektrischen Stecker (13) von der zugehörigen elektrischen Buchse (14) zu entkoppeln.

9. Vorrichtung (1) nach Anspruch 1, **dadurch gekennzeichnet, dass** sie wenigstens eine Vorrichtung (17) zum Aufdrucken von Hinweisen auf den Beutel (4) umfasst.

10. Vorrichtung (1) nach Anspruch 9, **dadurch gekennzeichnet, dass** die Druckvorrichtung (17) zwischen den Versiegelungsmitteln (6) und einer Wand (11a, 11b) angeordnet ist, die die Vakuumkammer (3) lateral begrenzt und den Versiegelungsmitteln (6) benachbart und zugewandt ist.

11. Vorrichtung (1) nach Anspruch 10, **dadurch gekennzeichnet, dass** sie in der lateralen Begrenzungswand (11a, 11b) eine Kopplung mit einem Gleiter (20) umfasst, der gleitend mit einem zugehörigen Aufnahmesitz (21) zusammenwirken kann, der in der Druckvorrichtung (17) definiert ist.

12. Vorrichtung (1) nach Anspruch 9, **dadurch gekennzeichnet, dass** die Druckvorrichtung (17) eine Basis (22), die eine Mehrzahl von Druckwalzen (23) stützt, die auf ein Signal hin axial rotieren können und umfangseitig in Relief mit Zahlen und/oder Buchstaben versehen sind, die auf den Beutel (4) zu drucken sind, und einen Kopf (24) umfasst, der beheizt werden kann und sich auf ein Signal hin auf die Basiskammer (22) zu oder von ihr weg zwischen einer inaktiven Position, in der der Beutel (4) zwischen der Basis (22) und dem Kopf (24) angeordnet werden kann, und einer aktiven Position bewegt werden kann, in der der Beutel (4) durch den Kopf (24) gegen die Druckwalzen (23) gedrückt wird.

13. Vorrichtung (1) nach Anspruch 12, **dadurch gekennzeichnet, dass** der Kopf (24) mit einem Anlageanteil (27), der an einem oberen Schließdeckel (5) der Vakuumkammer (3) definiert ist, bei dem Übergang des Schließdeckels (5) von einem offenen Zustand in einen geschlossenen Zustand in Eingriff gebracht werden kann, um den Kopf (24) von der inaktiven Position in die aktive Position zu bewegen.

14. Vorrichtung (1) nach Anspruch 12, **dadurch gekennzeichnet, dass** elastische Rückholmittel (25, 26) zwischen der Basis (22) und dem Kopf (24) angeordnet sind und eingerichtet sind, um dem Übergang des Kopfes (24) von der inaktiven Position in die aktive Position entgegen zu wirken.

## Revendications

1. Appareil (1) pour le conditionnement sous vide de denrées alimentaires, comportant un bâti (2) en forme de caisson qui définit au moins une partie d'une chambre à dépression (3) qui peut être raccordée à un moyen de production de vide et est conçue pour recevoir une poche (4) qui contient les denrées alimentaires à conditionner, ladite chambre à dépression (3) contenant des moyens de scellement (6) conçus pour fermer hermétiquement ladite poche (4), ladite chambre à dépression (3) ayant au moins une zone de réception (15) servant à placer sensiblement verticalement au moins une partie (4b) de ladite poche (4) qui est disposée du côté opposé par rapport à l'embouchure (4a) de ladite poche (4), ladite/lesdites zones de réception (15) comprenant un logement (16) défini dans la paroi du fond (3a) de ladite chambre à dépression (3), lesdits moyens de scellement (6) comprenant une barre de thermosoudage (7), ledit logement (16) étant disposé longitudinalement et sensiblement parallèlement à ladite barre de thermosoudage (7), **caractérisé en ce que** ladite barre de thermosoudage (7) est montée sur ledit bâti en forme de caisson (2) à l'aide de deux bras de support (10a, 10b) qui sont fixés, à une de leurs extrémités, à une partie terminale respective de ladite barre de thermosoudage (7) et sont articulés, à leur autre extrémité, autour d'un axe d'oscillation (7a), à une paroi respective (11a, 11b) pour délimiter latéralement ladite chambre à dépression (3).

2. Appareil (1) selon la revendication 1, **caractérisé en ce qu'**au moins une partie de la paroi du fond (3a) de ladite chambre à dépression (3) définit une surface de support sensiblement horizontale (16a) pour ladite poche (4).

3. Appareil (1) selon la revendication 2, **caractérisé en ce que** ladite surface de support (16a) est disposée du côté opposé de ladite barre de thermosoudage (7) par rapport audit logement (16).

4. Appareil (1) selon la revendication 2, **caractérisé en ce que** ladite barre de thermosoudage (7) est montée de façon à pouvoir osciller par rapport audit bâti en forme de caisson (2), autour dudit axe d'oscillation (7a) sensiblement parallèle et espacé par rapport à ladite barre de thermosoudage (7), afin de passer d'une position basse, dans laquelle ladite barre de thermosoudage (7) est proche dudit bâti analogue à un caisson (2), à une position haute, dans laquelle ladite barre de thermosoudage (7) est espacée dudit bâti en forme de caisson (2), et vice versa.

5. Appareil (1) selon une ou plusieurs des revendications précédentes, **caractérisé en ce que** chacun desdits bras de support (10a, 10b) est monté sur la paroi de délimitation latérale respective (11a, 11b) de ladite chambre à dépression (3) à l'aide d'une charnière d'articulation correspondante (12), qui comprend des moyens (13, 14) pour la connexion électrique à un système d'alimentation électrique de ladite barre de thermosoudage (7).

6. Appareil (1) selon la revendication 5, **caractérisé en ce que** lesdits moyens de connexion électrique comprennent un connecteur électrique mâle (13) et un connecteur électrique femelle (14) qui sont disposés coaxialement audit axe d'oscillation (7a) et sont mutuellement associables de façon à pouvoir tourner autour de leur propre axe.

7. Appareil (1) selon la revendication 5, **caractérisé en ce que** ledit axe (7a) est en matière électriquement conductrice afin de connecter électriquement les extrémités de ladite barre de thermosoudage (7) auxdits moyens de connexion électrique (13, 14).

8. Appareil (1) selon la revendication 6, **caractérisé en ce que** lesdits bras (10a, 10b) peuvent, pas flexion par élasticité, être écartés de la paroi de délimitation latérale correspondante (11a, 11b) afin de débrancher l'un de l'autre le connecteur électrique mâle respectif (13) et le connecteur électrique femelle correspondant (14).

9. Appareil (1) selon la revendication 1, **caractérisé en ce qu'**il comporte au moins un dispositif (17) pour imprimer des indications sur ladite poche (4).

10. Appareil (1) selon la revendication 9, **caractérisé en ce que** ledit dispositif d'impression (17) est disposé entre lesdits moyens de scellement (6) et une paroi (11a, 11b) pour délimiter latéralement ladite chambre à dépression (3) qui est adjacente aux desdits moyens de scellement (6) et en regard de ces derniers.

11. Appareil (1) selon la revendication 10, **caractérisé en ce qu'**il comporte, dans ladite paroi de délimitation latérale (11a, 11b), un accouplement avec un curseur (20) qui peut coulisser au contact d'une surface de retenue (21) définie dans ledit dispositif d'impression (17).

12. Appareil (1) selon la revendication 9, **caractérisé en ce que** ledit dispositif d'impression (17) comprend une embase (22) qui supporte une pluralité de cylindres d'impression (23) qui peuvent tourner axialement à la suite d'une instruction et possèdent, sur leur pourtour, des chiffres et/ou des lettres en relief pour réaliser une impression sur ladite poche (4), et une tête (24) qui peut être chauffée et, à la suite d'une instruction, se rapprocher ou s'éloigner de ladite embase (22) entre une position de repos, dans laquelle ladite poche (4) peut être placée entre ladite embase (22) et ladite tête (24), et une position de travail, dans laquelle ladite poche (4) est appuyée par la tête (24) contre lesdits cylindres d'impression (23).

13. Appareil (1) selon la revendication 12, **caractérisé en ce qu'**un moyen de butée (27) défini sur un couvercle supérieur de fermeture (5) de ladite chambre à dépression (3) peut venir contre ladite tête (24), pendant la transition dudit couvercle de fermeture (5) d'un état d'ouverture à un état de fermeture, afin de faire passer ladite tête (24) de ladite position de repos à ladite position de travail.

14. Appareil (1) selon la revendication 12, **caractérisé en ce que** des moyens élastiques de rappel (25, 26) sont intercalés entre ladite embase (22) et ladite tête (24) et sont conçus pour contrarier la transition de ladite tête (24) de ladite position de repos à ladite position de travail.
